# EUROPEAN PATENT APPLICATION

(11) **EP 1 563 988 A1**
(43) Date of publication of application: **17.08.2005**
(21) Application number: 03758127.9
(22) Date of filing: 20.10.2003
(51) Int. Cl.: B32B 3/10, B32B 3/20, B32B 7/12, B32B 27/32, B65D 65/30, B65D 81/26

(54) **VALVE-EQUIPPED LAMINATED FILM WHICH CAN BE USED FOR MICROWAVE COOKING, IN THE FORM OF A TRAY OR A CLOSED BAG**

(30) Priority: 31.10.2002 ES 200202508
(71) Applicant: Hispanosuiza de Patentes, s.L., 28023 Madrid (ES)
(72) Inventor: HANSPETER, Steffen, D., ** (ES)
(74) Representative: Riera Blanco, Juan Carlos
(86) International application number: PCT/ES2003/000529
(87) International publication number: WO 2004/039575

(57) **Abstract**

The invention relates to a valve-equipped laminated film which can be used for microwave cooking, in the form of a tray or a closed bag. The invention comprises two sheets (3) and (4) which are interconnected by means of food-grade silicon or any other similar gel, said silicon containing a food-grade microbial agent, hydroxybenzoic acid and an ethylene-absorbing agent. According to the invention, a tube is formed at the connection between one area (8) of the upper sheet, which is disposed longitudinally and which is provided with aligned slits (5), and one area (9) of the lower sheet (4), which comprises slits (7) that are incorporated into the strip (9), the upper part of which is connected to the upper sheet (3) using the food-grade silicon.

## Description

### Objective of the invention

The present description relates to the application of an invention patent corresponding to a valve-equipped laminated film which can be used for microwave cooking, in the form of a tray or a closed bag, made from a laminated film called "Ventpack" in such a way that in its configuration it incorporates a valve for the steam cooking in a microwave oven.

### Field of application of the invention

This invention has its main application in the industry dedicated to the manufacturing of means and goods for the packing and cooking of fresh produce in the micro-waves.

### State of the technology

Several methods and technologies actually are known to the applicant for the cooking with steam in microwave ovens as follows:
- Laminated films with open perforations consisting of a laminated film which is perforated or which has to be perforated with a needle or similar tool, before goods to be cooked are introduced in to the microwave oven whereby the performed perforations represent a non controllable application, because the vapor pressure does not reach an acceptable high enough level and therefore does not allow the build up of counter- pressure.
   From the view point of hygiene, this application can cause infections by contaminating the food through the open perforations; even so the perforations are covered by a masking tape slip. Cooked food with such a perforated film is dehydrating very fast and the food quality is deteriorating in a substantially rapid way.

The film laminate with incorporated plastic membrane valve is a technology, which is functioning well, but its application is price wise substantially high, because of the high cost of the membrane valves and furthermore the application requires complicated expensive machinery for applying the valves to the film and is therefore a problematic packing solution for microwave cooking.
- A laminated film which opens at sealing points by the influence of heat and steam pressure, whereby the level of heat and vapor pressure causes the rupture of the sealed area, and the uncontrolled escape of steam presents a disadvantage, because the cooking performs with heat and vapor only without the necessary pressure to achieve a reduction by half of the cooking time. Another negative point of this invention lies in the fact that the cooked produce is dehydrating very quickly during the cooking process caused by the escaping vapor, and results therefore in a poor quality of the meals.

As a consequence, it was necessary to invent an application in this field which contains a valve for the steam-cooking of most food-stuff which does not have the inconvenience of the other systems.

To the knowledge of the applicant there are no other systems available today, which can cope with the new invention.

### Description of the invention

The valve-equipped laminated film which can be used for microwave cooking in the form of a tray or a closed bag, which this invention proposes, represents a real novelty in this special field of application.

More specific, the valve-equipped laminated film which can be used for microwave cooking in the form of a tray or a closed bag, as the invention suggests, is made from a film, or sheet, consisting of two or more sheets of laminates made out of "poly-raisins".
The laminate of poly-raisins is fabricated from PETP (poly- ethyl- tetra- butane) OPP (oriented polypropylene) and PE (polyethylene) or other suitable materials.
The films or sheets may be produced out of a transparent material and may have printings on the surface, whereby the films are sealed together with glue, sheet by sheet, in such a way, that there are one or more bands, forming a tube alongside the film or sheets.

The mentioned bands are not united or bonded together with glue, but with food grade silicone paste or a similar gel, containing a food grade anti-microbial agent, preferably hydro benzoic acid, and an adsorbing agent for ethylene.

Before the different layers of the film are bond together, forming the band like tubes with silicon between the layers, the films or sheets are perforated with a rotating cutter in form of vertical slits with a dimension preferably between 1 to 10mm.
At the lower inner side of the film, the before mentioned slits are applied to the polyethylene film in two or more rows with vertical similar distances, and at the upper side of the film, the slits are cut in the same vertical sense, but only in a single row, exactly between the slits of the inner lower side of the film or sheet.

After the cutting of the slits, the films are joint together, after having applied the silicon paste on the bands forming the tubes.

The film has as well anti-fog properties and has the ability to adsorb the ethylene gas formed by respiring products inside the container.

It has to be mentioned in addition, that this laminated film with valves is sealed with a sealing machine to the tray which holds the food product, which will be cooked in the microwave oven, and which, during this cooking process in the microwaves, will produce vapor, which will inflate or steam- blow the tray with increasing pressure.

When the internal pressure reaches an increase of 25 mbar, the steam escapes through the first slits in the lower sheet, entering inside the bands of tubes, filled with silicone paste, opening them swiftly, and finally escapes through the slits on the upper side of the film sheet.

The resistance of the silicone guarantees a regular even pressurization of the tray at a maximum level during the cooking process in the microwave oven, with the effect to reduce considerably the cooking time.

After the cooking, the film with the valve is torn off the tray, and the food is ready to be eaten.

The valve-equipped laminated film which can be used for microwave cooking in the form of a tray or a closed bag, permits for the first time steam cooking with a valve incorporated in the film whereby the film itself acts as a one way pressure-valve.

This film with incorporated valve is substantially cheaper than a film which uses a plastic valve, creating a contra-pressure, and maintaining a viable level of pressure for the fast cooking in the microwaves.

Furthermore, the valve-equipped laminated film which can be used for microwaves in the form of trays and closed bags, is manufactured in such a way, that the film has a good permeability for the exchange of gases in the tray, to permit a respiration of fresh products without letting microbes entering the tray through the perforated slits, thanks to the added anti-microbial agent in the silicon and the adhesive properties of the silicon paste and having anti-fog properties and the capacity to adsorb ethylene gas, for the purpose to function as a sealing film for trays (containers) or pouches as well as an auto-regulating pressure valve during the steam cooking in the microwave oven.

In the synthesis, the invention is made from a laminated film with valve, containing two or more layers, they are made of films or sheets of poly-resins, transparent or printed, treated with anti-fog substances, partially bonded together with adhesives, containing vertical bands, joint together by a food-grade silicon, forming a vertical tube, containing a line of slits in the under layer and two or more lines of slits in the upper layer, collocated in a lateral an parallel fashion with the under layer, united by silicon to the upper layer and containing anti-microbial agents as well as with ethylene adsorbing properties, with the aim to serve as a sealing film for trays (containers) or bags and to be functional as pressure auto-regulating tool during the stem-cooking in a microwave oven.

### Description of the designs

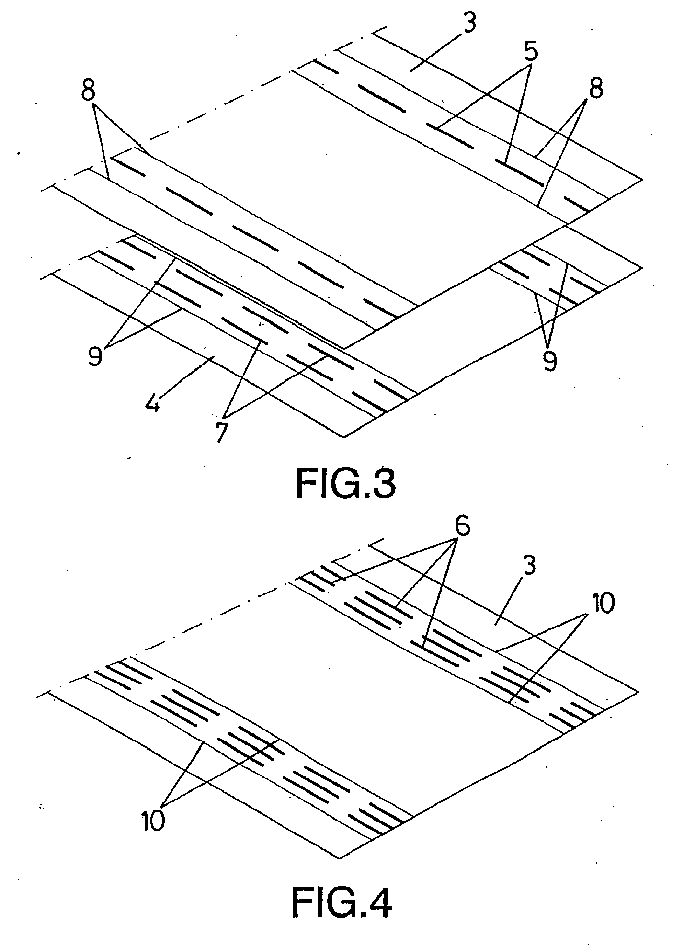

To complete the description as done before and with the objective for a better understanding of the characteristics of the invention, a set of designs are added to the actual presentation, in which the following is demonstrated, with illustrative and non limited character:
The figure number 1: Represents a perspective view of a reel of film, corresponding to the invention in form of a laminated film with incorporated valve for the cooking in the microwave in trays or closed bags.
The figure number 2: Represents a view of the invention shown in figure number 1, incorporating the united sheets according to the invention.
The figure number 3: Represents a view of the invention made from two laminates which are bonded together, using food grade silicon or another suitable adhesive.
The figure number 4: Shows the object in figure No. 3 in parts.

### Implementation of the invention

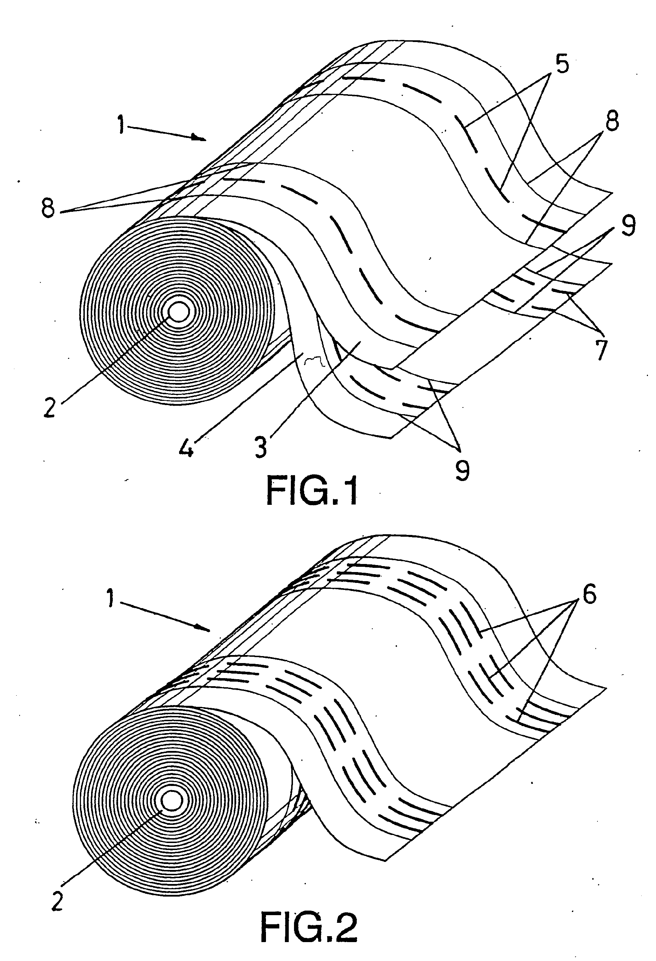

In view of this figures and especially following the figures 1 and 3, one can see, how the invention is made, out of a laminated film with an applied valve for the cooking in microwaves in trays or closed bags, torn from a roll or reel (1) with a nucleus (2) on which two laminates are rolled on, fabricated from poly-ethyl-tetra-butane (PETP), oriented poly-propylene (OPP) and polyethylene (PE) which may be manufactured as transparent or printed or lettered sheets or films (3) and (4) and are united, layer by layer, with the help of an adhesive in such a form, that they are creating spaces in form of bands (8) and (9), forming longitudinal tubes with the film, and this bands are not conventionally bonded together but are bonded with a layer of food grade silicone or an other gel with similar properties.

The silicone used, contains an anti-microbial food grade agent, hydro benzoic acid and an ethylene adsorbing agent.

As one can observe in the mentioned figures, the bands, formed by the tubes referring to (8) and (9), are showing slits, perforated in its central surface (5) and (7), respectively an alignment of openings (5) in the laminate (3) in the central zone of the band ((9) in such a way, that by uniting the laminated sheets and with the addition of food grade silicon, the cooking-steam can pass through the slits (7) inside the conducts built by the bonded laminates (3) and (4) and by the bond of the zones (8) and (9) creating the longitudinal tube, formed by the bonded laminates or sheets (3) and (4) by means of the food grade silicon or an other gel with similar properties containing an anti-microbial food grade agent, hydro benzoic acid, and an ethylene adsorbing agent.

The invention may have on the surface of the sheets or films several slits (6) which are parallel situated to each other, forming a zone for the steam extraction in the film or band (3), as shown in figures 1 and 2.

## Claims

1. 1- Valve-equipped laminated film which can be used for microwave cooking, in the form of a tray or a closed bag, of produce, utilized for food-cooking inside a microwave oven, **characterized** to be made out of at least two bonded laminates (3) and (4), whereby, with the means of food grade silicone or an other gel with similar properties, containing an anti-microbial food grade agent, hydro benzoic acid and an ethylene adsorbing agent, they form a conduct or tube by uniting the zone (8), in longitudinal position, which contains aligned slits (5) in the zone (9) situated in the laminated sheet (4) which also contains slits (7), as well longitudinal and parallel positioned, which are incorporated in the band (9) which is bonded to the upper part of the laminated sheet (3) with the help of the above mentioned food grade silicon.

2. Valve-equipped laminated film which can be used for microwave cooking, in the form of a tray or a closed bag, according to the first claim, **characterized by** the fact, that the laminated film may contain several numbers of slits (6), situated parallel inside the band, incorporated between the silicon bonded sheet layers forming a tube.
